(19) Europäisches Patentamt
European Patent Office
Office européen des brevets

(11) Publication number: 0 368 793 A2

# (12) EUROPEAN PATENT APPLICATION

(21) Application number: 89630194.2

(51) Int. Cl.5: G01D 1/18

(22) Date of filing: 26.10.89

(30) Priority: 26.10.88 US 262868

(43) Date of publication of application: 16.05.90 Bulletin 90/20

(84) Designated Contracting States: DE FR GB IT

(71) Applicant: UNITED TECHNOLOGIES CORPORATION
United Technologies Building 1, Financial Plaza
Hartford, CT 06101(US)

(72) Inventor: Sprague, Brian J.
18 Birchwood Road
Enfield Connecticut 06082(US)

(74) Representative: Waxweiler, Jean et al
OFFICE DENNEMEYER S.à.r.l. P.O. Box 1502
L-1015 Luxembourg(LU)

## (54) Overspeed detection with hysteresis.

(57) A sensed frequency signal is compared to a first selected frequency signal and an overfrequency signal is provided if the magnitude of the sensed frequency signal is greater than the magnitude of the first selected frequency signal. The overfrequency signal is cancelled if the magnitude of the sensed frequency signal subsequently becomes less than that of a second selected frequency signal.

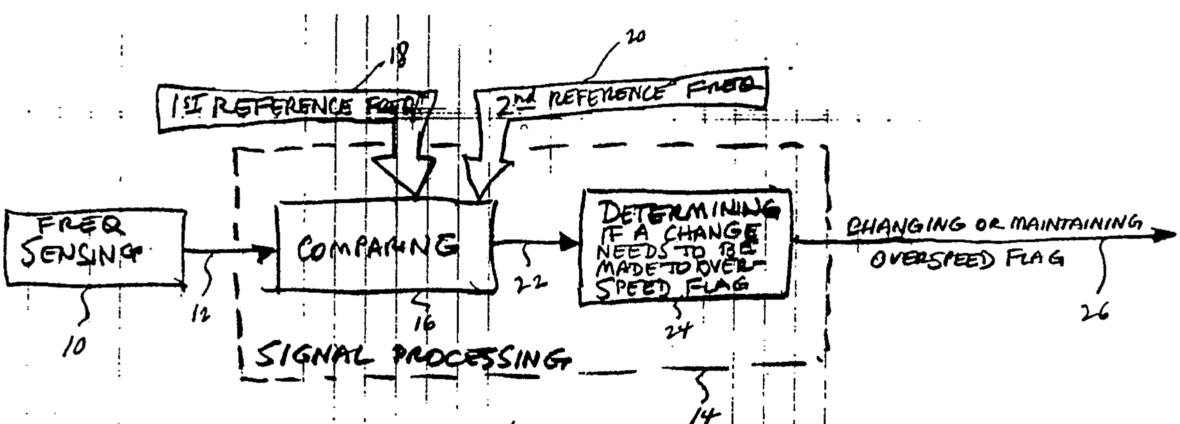


FIG 1

EP 0 368 793 A2

# Overspeed Detection With Hysteresis

## Technical Field

This invention relates to frequency detection and, more particularly, to overspeed detection for rotating machinery.

## Background Art

Overspeed protection is critical for large machinery. For example, in aircraft jet engines, it is necessary to provide such protection in order to shut down an engine which is overspeeding and possibly becoming uncontrolled in a speed runaway condition. Thus, before taking off, a pilot will typically speed the engine up to test the overspeed circuit at a fairly low "dummy" overspeed limit. If the circuit works, another overspeed value, appropriate for flight conditions, is substituted into the circuit.

During flight conditions, if the overspeed condition occurs, the engine will be shut down by the circuit. Unfortunately, if there is a desire to restart the engine, the pilot will have to go through all of the initialization routines all over again. Moreover, in some flight situations, such may not always be the best approach.

## Disclosure Of The Invention

The object of the present invention is to provide overspeed detection with hysteresis.

According to the present invention, a sensed frequency signal is compared to a first selected frequency signal in order to provide an overfrequency signal if the magnitude of the sensed frequency signal is greater than the magnitude of the first selected frequency signal. Subsequently, if the magnitude of the sensed frequency signal becomes less than that of a second selected frequency signal the overfrequency signal is no longer provided.

In further accord with the present invention, the invention may be carried out by signal processing means responsive to a sensed signal indicative of the angular velocity of a rotating member for comparing the sensed signal to an overspeed reference signal and providing an overspeed status signal if the magnitude of the sensed signal is greater than the magnitude of the overspeed reference signal. A signal processor also compares the sensed signal to a hysteresis reference signal for cancelling any such overspeed status signal if the magnitude of the sensed signal becomes less than that of the hysteresis reference signal.

Or, such an apparatus may comprise a special purpose signal processor. For example, a pair of counters and corresponding comparators can be combined to accomplish the signal processing function described above. A first counter can be set up to be responsive to a repetitive reset signal and to a series of signal pulses occurring at a frequency indicative of the magnitude of a variable angular velocity for counting the signal pulses between occurrences of the reset signal and providing a first count signal having a magnitude indicative thereof. A first comparator means would be set up to be responsive to the first count signal and also responsive to a first reference signal for providing the reset signal upon the first count signal equalling or becoming greater than the first reference signal a second counter means can be set up to be responsive to the repetitive reset signal and to a series of signal pulses occurring at a selected frequency indicative of the magnitude of a reference angular velocity for counting the signal pulses between occurrences of the reset signal and providing a second count signal having a magnitude indicative thereof. A second comparator means would be responsive to the second count signal, to a second reference signal and to a third reference signal for providing an overspeed signal upon the second count signal equaling or becoming greater than the second reference signal and for ceasing to provide the overspeed signal upon the second count signal being equal or less than the third reference signal.

The present invention provides recovery from an overspeed shutdown condition without having to reinitialize the entire system. After an overspeed shutdown, the machine will slow down until reaching a hysteresis reference level at which point the system is automatically restarted. If the overspeed condition persists, the system will again shutdown and will be again restarted at the hysteresis level. On the other hand, the first overspeed condition may have been a one time occurrence and the machine may never again overspeed. Therefore, a complicated and time consuming restart will be avoided. If an overspeed occurs again or repeatedly, the operator or pilot can decide whether to permanently shutdown the engine or whether to continue to allow it to overspeed and repeatedly be shutdown and restarted if a need exists.

These and other objects, features and advantages of the present invention will become more apparent in light of the following detailed description of a best mode embodiment thereof, as illustrated in the accompanying drawing.

Brief Description Of The Drawings

Fig. 1 is a simplified block diagram illustration of steps, for example, for determining if an overspeed condition exists, according to the present invention;

Fig. 2 is an illustration of a signal processor which may be used in carrying out the steps illustrated in Fig. 1 or those illustrated in Fig. 3, for example, according to the present invention;

Fig. 3 is a simplified flowchart illustration of a series of steps which may be carried out on the signal processor, for example, of Fig. 2, according to the present invention; and

Fig. 4 is a simplified block diagram illustration of a signal processor which may be utilized in carrying out, for example, the steps illustrated in Fig. 1 or Fig. 3, according to the present invention.

Best Mode For Carrying Out The Invention

Fig. 1 is a simplified block diagram illustration of a number of steps which may be carried out, among others, in implementing the teachings of the present invention. A frequency is sensed in a step 10 and a sensed frequency signal provided on a signal line 12 to a signal processing step 14 which comprises the step 16 of comparing the magnitude of the frequency signal on line 12 to the magnitude of a first reference frequency signal on a line 18 or to the magnitude of a second reference frequency signal on a line 20 in order to provide a comparison signal on a line 22 for determining, in a step 24, if a change needs to be made to the status of an overspeed flag controlled by a signal on a line 26.

The signal on line 12 is compared to the first reference frequency signal on line 18 if the overspeed flag has not been set, i.e., if an overspeed condition has not occurred. Once an overspeed condition occurs, the magnitude of the signal on line 12 is compared to the magnitude of the second reference frequency signal on line 20. If the magnitude of the signal on line 12 then falls below or becomes less than the magnitude of the second reference frequency signal on line 20, the signal on line 22 changes in a manner which initiates a change, by way of step 24, in the status of the overspeed flag. In other words, an overspeed condition will no longer be signalled by the signal on line 26 and the shutdown condition is cancelled. In this way, the machine being monitored by the frequency sensing step 10 may be restarted and run normally or at least run until an overspeed condition again occurs. In that case, the signal on line 26 will again initiate an overspeed flag condition which will cause another shutdown. In the event that this does not occur then a time consuming reinitialization and restart of the machinery in question is avoided. And, this is particularly advantageous in a situation in which the machinery is fulfilling a need at a time in which such reinitialization procedures would be disadvantageous.

Fig. 2 is a simplified block diagram illustration of a general purpose signal processor 28 which may be used in carrying out the steps illustrated in Fig. 1 or, for example and among others, those illustrated in Fig. 3, to be described subsequently.

The signal processor 28 is responsive to a plurality of sensed and reference frequency signals indicated generally by a block 30 corresponding in a general way to the signals 10, 18, 20 of Fig. 1. Such signals are provided over a plurality of signal lines 32 to an input/output device 34 within the signal processor 28 which communicates with a data, address and control bus 36 which is in turn in communication with a central processing unit 38, a random access memory 40 and a read only memory 42.

Software routines for the comparing and determining steps 16, 24 of Fig. 1 may be written, by those skilled in the art of programming, in any number of different programming languages, depending on the nature of the signal processor. It should be understood that the steps illustrated in Fig. 1 are not by any means the only steps which may be carried out in implementing the broad concepts disclosed herein.

For example, Fig. 3 is another illustration of a series of steps which may be carried out on a signal processor such as that illustrated in Fig. 2.

After entering in a step 44, a step 46 is executed in order to input selected overspeed and hysteresis frequencies such as the reference signals 18, 20 illustrated in Fig. 1. A sensed frequency such as the step 10 illustrated in Fig. 1 is next input in a step 48. A determination is then made in a step 50 as to whether the sensed frequency is greater than the selected overspeed frequency. If so, an overspeed flag is set in a step 52 and an immediate exit is made in a step 54. The setting of such a flag would eventually be followed by the shutting down of the machinery being monitored (not shown).

If it were determined in step 50 that the sensed frequency were not greater than the selected overspeed frequency, a step 56 would next be executed in which a determination would be made as to whether or not the overspeed flag was set. If not, an exit is immediately made by way of step 54. If so, this would mean that the machinery had oversped but was now slowing down and a determination would next be made in a step 58 as to whether or not the sensed frequency be less than the selected hysteresis frequency. If not, step 58 is repeatedly executed until such is the case. When this occurs, a step is next executed in which the overspeed flag is cancelled and an exit is made by way of step 54.

It will be realized by those skilled in the art of programming that any number of variations of steps may be employed in carrying out the teachings of the present invention and those illustrated in Fig. 1 and 2 are merely illustrative.

Fig. 4 is a simplified block diagram illustration of a special purpose signal processor 62 which, among others, may be used to carry out the steps illustrated in Fig. 1 or Fig. 3.

A frequency sensor 64 provides a series of pulses on a signal line 66 to a counter 68 which counts the pulses and provides a count signal on a line 70 having a magnitude indicative of the count. A comparator 72 is responsive to the count signal 70 and also a reference signal on a line 74 and provides a reset signal on a line 76 upon the count signal on line 70 equaling or becoming greater than the reference signal on line 74. The reset signal is used to zero the counter 68 and also a counter 78 which is responsive to a known frequency signal on a line 80 from a known frequency source 82.

The counter 78 provides a count signal on a line 84 which is compared to one of two reference signals on signal lines 86 or 88 in a comparator 90. If an overspeed condition has not yet occurred, the signal on line 86 (which has a magnitude less than that of the signal on line 88) is the signal that comparator 90 utilizes in comparing the signal on line 84. The comparator 90 may be set up in such a way as to provide a high level signal output on a line 94 until the count represented by the signal on line 84 becomes equal to or greater than the signal to which it is being compared. At that point, the signal on line 94 goes low in time to be clocked into a shift register 96 by a clock signal on line 76 (same signal as the "reset" signal on line 76). But the signal level will go high again after the reset signal on line 76 zeroes the counter 78. If the signal on line 84 doesn't get large enough to equal the signal on line 86 before reset occurs then a "one" gets clocked into bit position 102, indicating an overspeed condition.

In any event, the comparator 90 provides an output signal on a line 94 to an overspeed detector device 98 which may comprise the 3-bit shift register 96 and an AND gate 100 responsive at its three inputs to each of 3-bits 102, 104, 106 in the shift register. If the signal on line 94 indicates an overspeed condition by virtue of the signal on line 84 not becoming equal to or greater than the signal on line 86 before reset then a digital "high" (or "one") will be stored in the first bit location 102 of the shift register 96. If the overspeed condition persists after the shift register 96 is shifted by the reset signal on line 76 (characterized in Fig. 4 also as a "clock" signal into the 3-bit shift register 96) the digital "one" stored in bit location 102 will be shifted into a bit location 104 and a new digital "one" will be loaded into bit location 102. If the overspeed condition persists on line 94 for a period extending until the next reset pulse occurs on line 76 than the digital "one" in bit location 104 will be shifted into bit location 106 and the digital "one" in bit location 102 will be shifted into bit location 104. When all 3-bit locations 102, 104, 106 thus have a digital "one" therein, AND gate 100 provides the signal on line 92 and a flip-flop 110 will provide a shutdown signal on a line 112. This will be effective to shutdown the overspeeding machinery. The flip-flop will "remember" that an overspeed condition existed and continue to provide a shutdown signal on line 112 even if the signal on the line 92 goes low. Thus, the machinery will stay shutdown until the signal on line 112 goes low again.

The signal on line 112 is also provided to the comparator 90 in order to indicate to the comparator that it should now compare the signal on line 84 to the hysteresis reference signal on line 88 instead of the overspeed reference signal on line 86. Thus, once an overspeed condition is determined by the overspeed detector 98 the comparator will then begin looking for a slowdown to a "hysteresis" speed level at which it will be considered proper to restart the machinery and give it another chance to operate correctly without overspeeding. Of course, once this occurs, the comparator 90 must again utilize overspeed reference signal 86.

In order to facilitate a removal of the high signal level on line 112 should the hysteresis level be achieved, an AND gate 114 is enabled by the signal on line 112. A "not" version of the signal on line 94 is also provided to AND gate 114 in order to cause the AND gate to reset the flip-flop 110 by means of a signal on a line 116 if the signal on line 94 goes low.

Thus, once the machine slows down sufficiently from an overspeed condition to permit the signal on line 84 to become greater than or equal to the hysteresis reference signal, the signal on line 94 will go low and a reset of the flip-flop 110 will occur thereby causing the signal on line 112 to go low, removing the shutdown flag condition. The comparator 90 will then start using the signal on line 86 again. Thus, the machinery may recommence operation without a time-consuming reinitialization. If the machine resumes operation without again overspeeding, a most advantageous result will have been achieved. If the machinery again overspeeds or continues to repeatedly overspeed, the operator or pilot may shut down the machinery manually or may continue to operate in this manner if it is desirable that the particular machine continue operating even though in a quasi-inoperative mode.

According to the teachings of the present invention, it is sometimes advantageous to provide the operator or pilot with this added option.

Although two methods and two hardware embodiments of the present invention have been shown it should be pointed out that the method of Fig. 1 and the apparatus of Fig. 4 are preferred. In fact, the apparatus of Fig. 4 has been incorporated in the form of a programmable state machine or sequencer in a gate array which communicates with an external memory for its reference signals. The details of the gate array are not shown herein as it is within the capabilities of those of ordinary skill in the art to provide any number of different gate array embodiments of the apparatus of Fig. 4. Suffice it to say that a gate array embodiment, made in accordance with the teachings of Fig. 4, is presently the preferred embodiment because of its processor independence.

Although the invention has been shown and described with respect to a best mode embodiment thereof, it should be understood by those skilled in the art that the foregoing and various other changes, omissions, and additions in the form and detail thereof may be made therein without departing from the spirit and scope of the invention.

## Claims

1. A method, comprising the steps of:
comparing a sensed frequency signal to a first selected frequency signal; and
providing an overfrequency signal if the magnitude of said sensed frequency signal is greater than the magnitude of said first selected frequency signal and cancelling said overfrequency signal if the magnitude of said sensed frequency subsequently becomes less than that of a second selected frequency signal which is less than that of said first selected frequency signal.

2. A method, comprising the steps of:
sensing a frequency and providing a sensed frequency signal indicative thereof;
comparing said sensed frequency signal to a first selected frequency signal and providing an overfrequency signal if the magnitude of said sensed frequency signal is greater than the magnitude of said first selected frequency signal and cancelling said overfrequency signal if the magnitude of said sensed frequency signal subsequently becomes less than that of a second selected frequency signal which is less than that of said first selected frequency signal.

3. Apparatus, comprising:
sensing means, responsive to a parameter indicative of angular velocity, for sensing said angular velocity and providing a sensed signal indicative thereof; and
signal processing means, responsive to said sensed signal, for comparing said sensed signal to an overspeed reference signal and providing an overspeed status signal if the magnitude of said sensed signal is greater than the magnitude of said overspeed reference signal and for comparing said sensed signal to a hysteresis reference signal for cancelling said overspeed status signal if the magnitude of said sensed signal becomes less than that of said hysteresis reference signal.

4. Apparatus, comprising:
first counter means, responsive to a repetitive reset signal and to a series of signal pulses occurring at a frequency indicative of the magnitude of a variable angular velocity, for counting said signal pulses between occurrences of said reset signal and providing a first count signal having a magnitude indicative thereof;
first comparator means, responsive to said first count signal and responsive to a first reference signal, for providing said reset signal upon said first count signal equalling said first reference signal;
second counter means, responsive to said repetitive reset signal and to a series of reference signal pulses occurring at a selected frequency indicative of the magnitude of a reference angular velocity, for counting said reference signal pulses between occurrences of said reset signal and providing a second count signal having a magnitude indicative thereof; and
second comparator means, responsive to said second count signal, to a second reference signal and to a third reference signal, for providing an overspeed signal upon said second count signal equalling or being less than said second reference signal upon an occurrence of said reset signal and for ceasing to provide said overspeed signal upon said second count signal being greater than or equal to said third reference signal upon a subsequent occurrence of said reset signal.

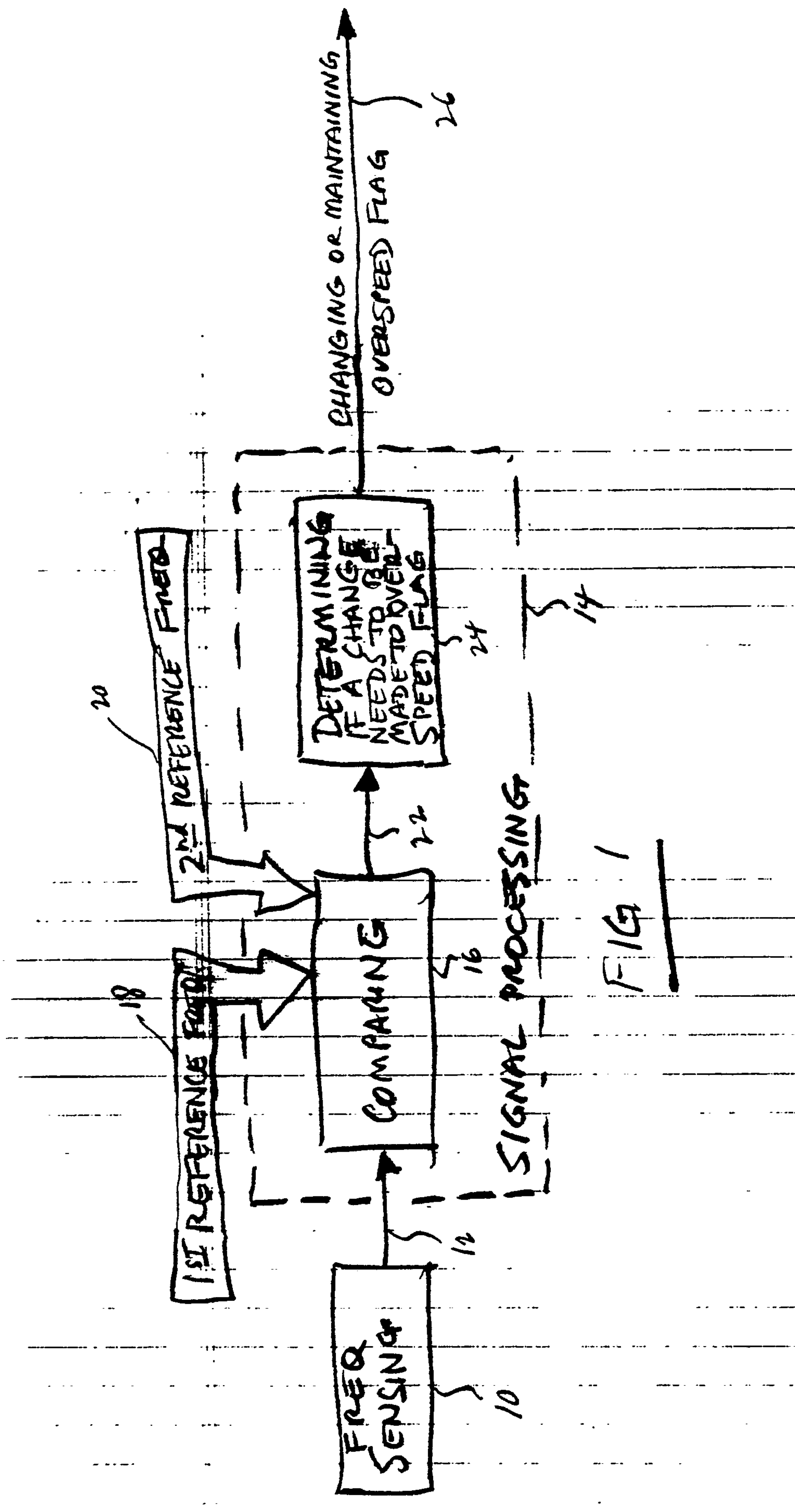
FREQ SENSING
10
12
1ST REFERENCE FREQ
18
2nd REFERENCE FREQ
20
COMPARING
16
22
DETERMINING IF A CHANGE NEEDS TO BE MADE TO OVERSPEED FLAG
24
SIGNAL PROCESSING
14
CHANGING OR MAINTAINING OVERSPEED FLAG
26

FIG 1

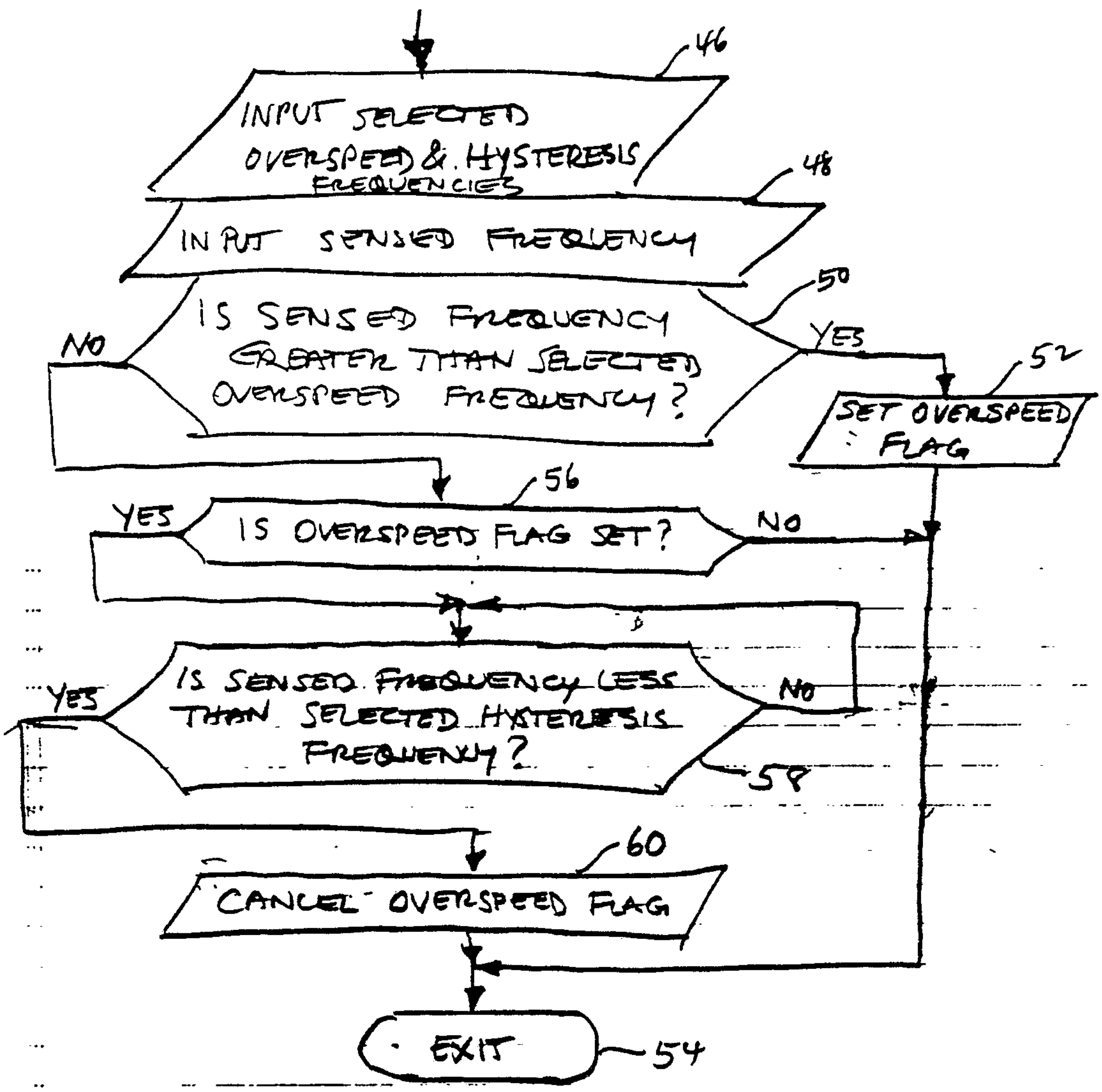
INPUT SELECTED OVERSPEED & HYSTERESIS FREQUENCIES
46
INPUT SENSED FREQUENCY
48
IS SENSED FREQUENCY GREATER THAN SELECTED OVERSPEED FREQUENCY?
50
NO
YES
SET OVERSPEED FLAG
52
IS OVERSPEED FLAG SET?
56
YES
NO
IS SENSED FREQUENCY LESS THAN SELECTED HYSTERESIS FREQUENCY?
58
YES
NO
CANCEL OVERSPEED FLAG
60
EXIT
54

FIG 3

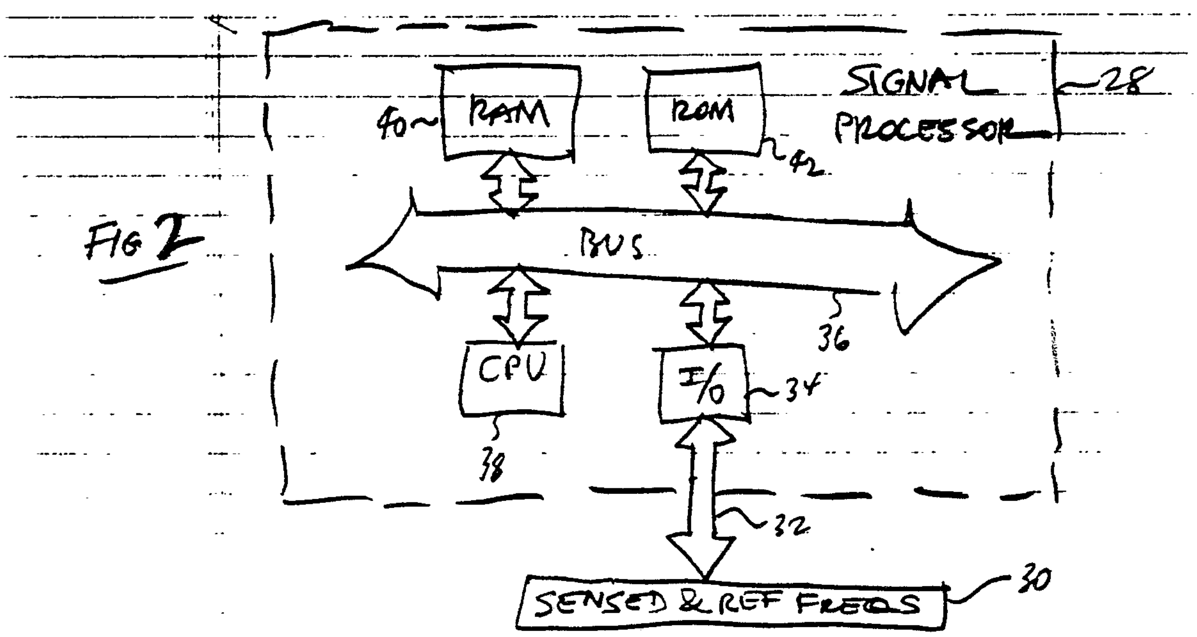
SIGNAL PROCESSOR
28
RAM
40
ROM
42
BUS
36
CPU
38
I/O
34
32
SENSED & REF FREQS
30

FIG 2

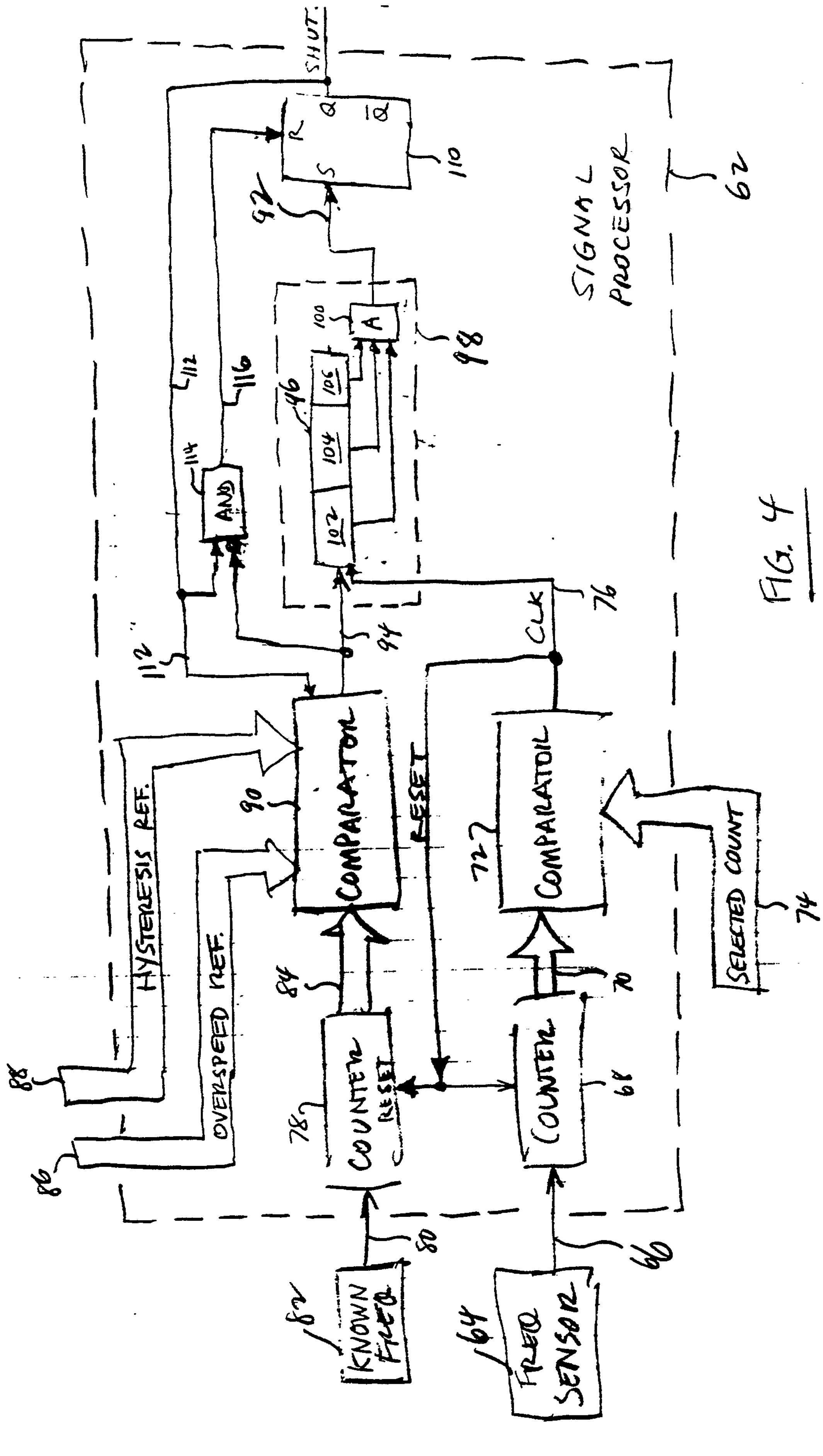
SHUT.
R
Q
S
Q̄
110
SIGNAL PROCESSOR
62
92
A
100
98
102
104
106
96
112
116
AND
114
94
CLK
76
COMPARATOR
90
RESET
COMPARATOR
72
SELECTED COUNT
74
HYSTERESIS REF.
OVERSPEED REF.
88
86
84
COUNTER
RESET
78
COUNTER
68
70
80
KNOWN FREQ
82
FREQ SENSOR
64
60

FIG. 4